# FASCICULE DE BREVET EUROPEEN

(11) **EP 3 043 920 B1**
(45) Date de publication et mention de la délivrance du brevet: **21.11.2018**
(21) Numéro de dépôt: 14777732.0
(22) Date de dépôt: 11.09.2014
(51) Int. Cl.: B05B 1/20, B05B 7/08, B05B 1/30, F16K 31/40, F16K 7/17, F16K 31/06, F25C 3/04, B05B 7/04

(54) **SYSTÈME DE PULVÉRISATION POUR ENNEIGEUR À ALIMENTATION BI-FLUIDE**
SPRÜHSYSTEM FÜR EINEN SCHNEEERZEUGER MIT ZWEISTOFFZUFUHR
SPRAY SYSTEM FOR A SNOW-MAKING MACHINE WITH DUAL FLUID SUPPLY

(30) Priorité: 13.09.2013 FR 1358848
(43) Date de publication de la demande: 20.07.2016
(73) Titulaire: Sufag, 73800 Sainte Helene Du Lac (FR)
(72) Inventeur: NAVECTH, Jean Armand, F-01300 Magnieu (FR); JOBARD, Philippe, F-38530 Chapareillan (FR)
(74) Mandataire: Verriest, Philippe
(86) Numéro de dépôt international: PCT/FR2014/052256
(87) Numéro de publication internationale: WO 2015/036706

(56) Documents cités:
- WO-A1-97/18421
- US-A1- 2001 030 242
- US-A1- 2011 174 895

## Description

La présente invention concerne un enneigeur ou canon à neige à alimentation bi-fluide.

Il est connu d'utiliser des enneigeurs alimentés par un premier circuit d'eau et un second circuit d'air sous pression. L'eau et l'air sont pulvérisés au niveau d'une tête de l'enneigeur pour constituer un mélange engendrant une neige de culture. Un tel enneigeur est connu du document US 2011/0174895 A1.

Au sein du mélange eau/air pulvérisé apparaissent des cristaux de glace lorsque la température extérieure inférieure à la température de solidification de l'eau. La nucléation ou production de cristaux entraine la transformation du mélange pulvérisé en glace cristalline ou neige.

La facilité de production de neige de culture est également influencée par la température extérieure : plus la température extérieure est faible plus la production est susceptible d'être importante.

La température extérieure pour l'utilisation de l'enneigeur devant être négative, il est nécessaire d'évacuer correctement l'eau ou du moins de limiter la quantité d'eau restante dans la tête à l'arrêt. En effet, dès l'arrêt du fonctionnement de l'enneigeur, des risques de détérioration du matériel apparaissent.

Des systèmes de maintien hors gel d'une partie de la tête de l'enneigeur existent et donnent satisfaction en ce qu'ils permettent de limiter l'impact du gel sur le matériel. Toutefois, de tels systèmes s'avère délicats à mettre en oeuvre et nécessite une maintenant régulière pour leur bon fonctionnement.

La présente invention vise à résoudre tout ou partie des inconvénients mentionnés ci-dessus.

A cet effet, la présente invention concerne un système de pulvérisation comprenant un premier circuit d'alimentation en un premier fluide liquide et un deuxième circuit d'alimentation en un deuxième fluide gazeux, chaque circuit étant pourvu d'une entrée destinée à être raccordée à une source d'alimentation en fluide correspondant.

Le système de pulvérisation comprend en outre un orifice d'un premier type raccordé fluidiquement au premier circuit et débouchant vers l'extérieur, un orifice d'un second type raccordé fluidiquement conjointement au premier et au deuxième circuit, l'orifice du second type débouchant vers l'extérieur et un orifice d'un troisième type raccordé fluidiquement au premier circuit et débouchant vers l'extérieur.

Le système de pulvérisation comprend également une vanne disposée dans le premier circuit et agencée pour alternativement autoriser, en position ouverte, et interdire, en position fermée, la communication fluidique entre le premier circuit et l'orifice du troisième type.

Le système de pulvérisation est agencé pour, en une position d'utilisation, la vanne étant ouverte, la vidange par écoulement gravitaire du premier circuit à travers l'entrée dudit premier circuit.

Lorsque le système de pulvérisation est en position d'utilisation, il est agencé pour que les premier et second circuits soient respectivement alimentés par les premier et second fluides à leurs entrées respectives.

La pulvérisation se produit lorsque la pression du premier fluide est supérieure à la pression extérieure et est suffisante pour vaincre la gravité. La pression du second fluide doit également être supérieure à la pression extérieure pour qu'un mélange se produise avec le premier fluide en sortie de l'orifice du second type.

Le débit de premier fluide pulvérisé par les orifices peut être modulé par l'ouverture et la fermeture de la vanne.

A l'arrêt de la pulvérisation, le premier circuit est agencé pour être vidangé pas la seule force de gravité. Ainsi la géométrie du premier circuit ne laisse pas apparaitre de zone de rétention.

Cette disposition permet, d'une part d'éviter les problèmes liés à la stagnation du fluide, notamment le gel et d'autre part de ne pas nécessiter ni dispositif spécifique, ni de changement de position pour la vidange du premier circuit.

Selon un aspect de l'invention, le premier circuit comprend au moins une conduite principale et une pluralité de conduites secondaires, chaque conduite secondaire étant, en position d'utilisation, en communication fluidique entre la conduite principale et un orifice, chaque conduite secondaire présentant un angle par rapport à l'horizontale.

Selon un aspect de l'invention, la conduite principale présente un angle par rapport à l'horizontal en position d'utilisation. Selon un autre aspect de l'invention, la conduite principale comprend au moins une portion verticale en position d'utilisation.

De préférence chaque conduite secondaire présente le même angle par rapport à l'horizontal. Selon un aspect de l'invention, chaque conduite secondaire est de longueur égale.

Selon un aspect de l'invention, le premier circuit comprend au moins une conduite principale et une pluralité de conduites secondaires, chaque conduite secondaire étant, en position d'utilisation, en communication fluidique entre la conduite principale et un orifice, chaque conduite secondaire présentant un angle par rapport à l'horizontale.

Selon un aspect de l'invention, la vanne est une vanne normalement fermée. L'utilisation d'une électrovanne normalement fermée permet de réduire la consommation énergétique, notamment en période de non utilisation du système.

Selon un aspect de l'invention, la vanne comprend un actionneur pourvu d'un noyau compris dans une zone intérieure de l'actionneur, le noyau étant mobile et agencé pour l'ouverture et la fermeture de la vanne, la vanne comprenant une membrane de séparation assurant l'étanchéité de la zone intérieure par rapport à la zone de passage du premier fluide dans la vanne.

Le premier fluide ne pénètre pas dans l'actionneur car il ne remplit pas la zone intérieure. Ainsi il n'y a aucun risque de détérioration de l'actionneur par le premier fluide se solidifiant à cause du froid.

De préférence, la zone intérieure contient un gel dont la température de solidification est inférieure aux températures d'utilisation du système de pulvérisation. Le noyau pilotant l'ouverture et la fermeture de la vanne, est ainsi toujours apte à se déplacer dans la zone intérieure même si la température dans cette zone est inférieure à la température de solidification du premier fluide.

Selon un aspect de l'invention, la vanne comprend une membrane obturatrice de la zone de passage du premier fluide, la vanne étant pourvue de moyens d'utilisation de la pression du premier fluide pour son ouverture et son maintien en position ouverte.

L'énergie de maintien des vannes en position ouverte est limitée. Cette disposition permet ainsi de limiter la consommation énergétique.

Selon un aspect de l'invention, le système de pulvérisation comprend une pluralité d'orifices du troisième type et une pluralité de vannes, chaque vanne étant affectée à un orifice du troisième type.

Les orifices du troisième type, pilotés par des vannes indépendantes, permettent une modulation du débit de premier fluide pulvérisé.

Les orifices du premier et du second type pulvérisent les premier et second fluides de manière permanente en utilisation.

Selon un aspect de l'invention, les orifices du deuxième type sont chacun pourvus d'une buse de mélange agencée pour réaliser un entrainement du premier fluide par le second et un mélange homogène.

Les buses de mélange sont adaptées pour la production de cristaux ou la nucléation du premier fluide lorsque la température extérieure est inférieure à la température de gel ou de solidification du premier fluide.

La nucléation du premier fluide est favorisée par une température faible. Le besoin en second fluide diminue ainsi à faible température. Le système de pulvérisation permet, par l'ouverture des vannes d'augmenter le débit en premier fluide à basse température. Ceci a pour conséquence l'augmentation de la production de glace cristalline se constituant à partir du premier fluide après nucléation.

Selon un aspect de l'invention, le premier fluide comprend de l'eau. Le système de pulvérisation convient donc à la production de neige de culture.

Selon un aspect de l'invention, en position d'utilisation, un groupe d'orifices comprend un orifice du premier type, un orifice du deuxième type et un orifice du troisième type, l'orifice du premier type étant le plus haut, l'orifice du deuxième type étant plus bas que l'orifice du premier type et l'orifice du troisième type étant plus bas que l'orifice du second type.

De préférence, selon la verticale, la distance entre l'orifice du premier type et l'orifice du second type est égale à la distance entre l'orifice du second type et l'orifice du troisième type.

Cette disposition favorise la production de glace cristalline. En effet, la trajectoire de sortie des fluides étant parabolique, la position de l'orifice du second type entre l'orifice du premier type et l'orifice du troisième type permet la réalisation d'un mélange homogène, c'est-à-dire un mélange dans lequel la nucléation du premier fluide se produit de manière homogène.

Selon un aspect de l'invention, le groupe d'orifices comprend en outre au moins un orifice de deuxième type et au moins un orifice de troisième type situés sous les autres orifices du groupe.

Selon un aspect de l'invention, chaque orifice de deuxième type est situé, par rapport à la verticale, entre un orifice de premier type et de troisième type ou entre deux orifices de troisième type.

Selon un aspect de l'invention, les orifices du groupe sont alignés verticalement. Cette disposition participe également à l'établissement d'un mélange homogène.

Selon un aspect de l'invention, le système de pulvérisation comprend au moins deux groupes. Pour augmenter la production de glace cristalline, il est possible de disposer de plusieurs groupes.

La présente invention concerne également un enneigeur à alimentation bi-fluide comprenant le système de pulvérisation et un agencement de contrôle apte à piloter l'alimentation des premier et deuxième circuits en fluides et à manoeuvrer les vannes.

Selon un aspect de l'invention, l'enneigeur comprend en outre un capteur agencé pour la mesure d'une température et/ou d'un degré d'hygrométrie, l'agencement de contrôle étant apte à utiliser les mesures du capteur.

Selon un aspect de l'invention, l'agencement de contrôle autorise l'alimentation en fluide pour une température extérieure inférieure à une première valeur. De préférence la première valeur est de -2°C.

Selon un aspect de l'invention, l'agencement de contrôle autorise l'alimentation en fluide pour une température extérieure supérieure à une seconde valeur. De préférence la seconde valeur est de -9°C.

Selon un aspect de l'invention, l'agencement de contrôle est agencé pour ouvrir plus ou moins de vannes en fonction des valeurs des mesures du capteur.

De préférence, aucune vanne n'est ouverte pour une température inférieure de moins de un degré à la première valeur. Selon un autre aspect de l'invention, chaque degré en deçà de la première valeur correspond à un seul d'ouverture d'une vanne supplémentaire.

Selon un aspect de l'invention, l'enneigeur comprend un pied pour le positionnement de l'enneigeur sur le sol, une perche et au sommet une tête, le système de pulvérisation étant ménagé dans la tête.

Selon un aspect de l'invention, l'enneigeur comprend un compresseur pour la production du second fluide sous pression. De préférence le second fluide est de l'air, en particulier à une pression comprise entre 6 et 8 bar.

Selon une variante, l'enneigeur comprend un système de déplacement, en particulier le système de déplacement comprenant des roues. Selon un autre aspect de l'invention, la source d'alimentation en premier fluide est un réservoir, l'alimentation étant réalisée par une pompe. Selon une variante la source d'alimentation est un réseau d'eau sous pression.

La présente invention concerne en outre un procédé de contrôle d'un enneigeur à alimentation bi-fluide comprenant les étapes consistant à mesurer une valeur de température extérieure et/ou une donnée hygrométrique, déterminer les vannes à ouvrir ou à fermer en fonction de la valeur mesurée, procéder à l'ouverture ou à la fermeture des vannes déterminées.

Selon un aspect de l'invention, la mesure de la valeur est réalisée régulièrement. L'enneigeur s'adapte ainsi en permanence pour une production de neige maximale en fonction notamment de la température extérieure. En effet, plus la température est faible plus le potentiel de production de neige est important.

De toute façon l'invention sera bien comprise à l'aide de la description qui suit en référence aux dessins schématiques annexés représentant, à titre d'exemple non limitatif, une forme d'exécution de cet enneigeur.
Figure 1 est une vue en perspective d'un enneigeur à alimentation bi-fluide.
Figure 2 est une vue en perspective d'une tête de l'enneigeur comprenant un système de pulvérisation.
Figure 3 est une vue de dessus de la tête de l'enneigeur.
Figure 4 est une vue de côté de la tête de l'enneigeur selon une coupe B-B.
Figure 5 est une vue de côté de la tête de l'enneigeur selon une coupe A-A.
Figure 6 est une vue de détail d'une buse de mélange du système de pulvérisation selon la coupe A-A.
Figure 7 est une vue schématique selon une coupe longitudinale d'une vanne du système de pulvérisation.
Figure 8 est une vue schématique selon la coupe longitudinale de la vanne en position fermée.
Figure 9 est une vue schématique selon la coupe longitudinale de la vanne en position ouverte.
Figure 10 est une vue de détail d'une douille et d'un noyau de la vanne.

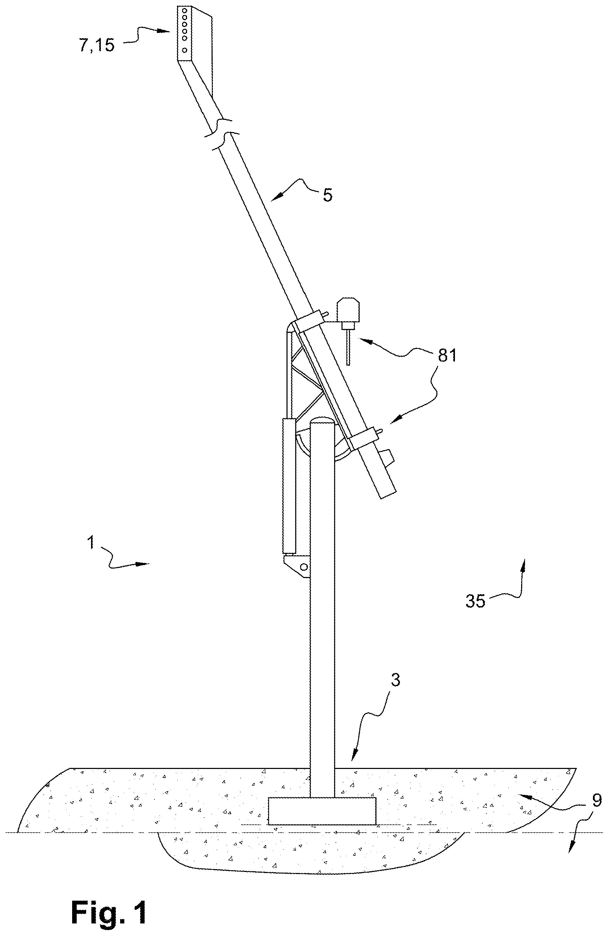

Comme illustré à la figure 1, un enneigeur 1 ou canon à neige à alimentation bi-fluide comprend un pied 3, une perche 5 et une tête 7. Optionnellement, l'enneigeur 1 peut être pourvu d'un système de déplacement comprenant deux roues. Dans le mode de réalisation présenté le pied 3 est fixé sur un sol 9 susceptible d'être recouvert de neige.

L'enneigeur 1 comprend en outre un compresseur à air non représenté qui peut être rapporté sur le pied 3 ou disposé sur le sol à distance du pied 3. L'enneigeur 1 est pourvu d'un système de pulvérisation 15, le système de pulvérisation 15 étant ménagé dans la tête 7.

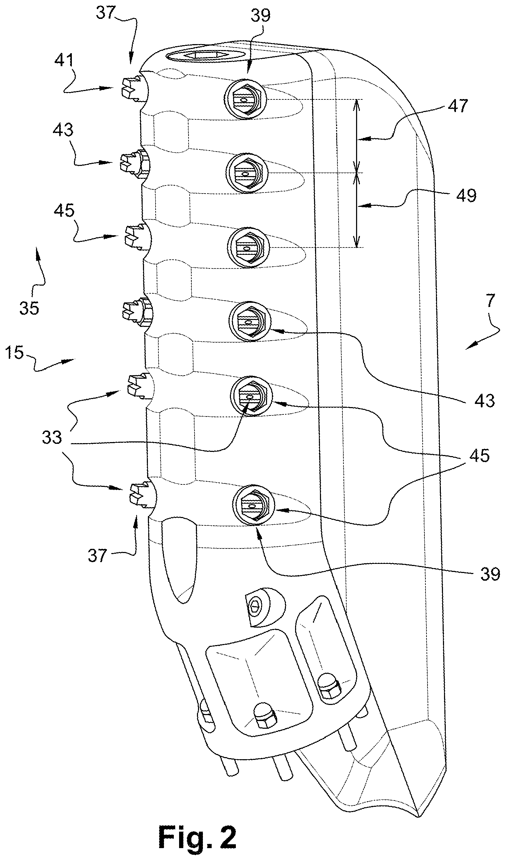

Comme illustré aux figures 2 à 5, le système de pulvérisation 15 comprend un premier circuit 17 destiné à la circulation d'un premier fluide liquide. Dans le mode de réalisation présenté le premier fluide liquide est de l'eau.

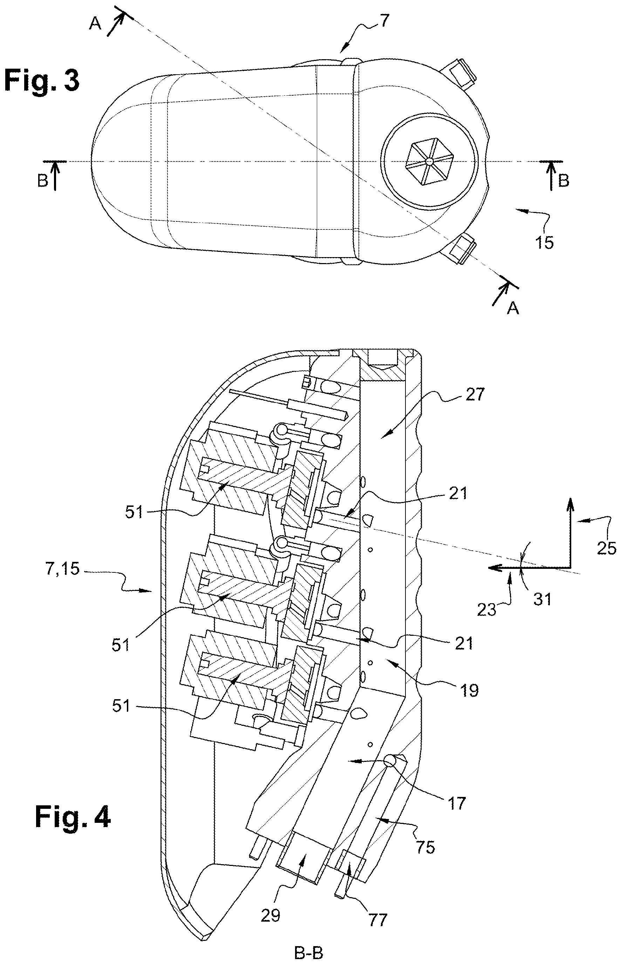

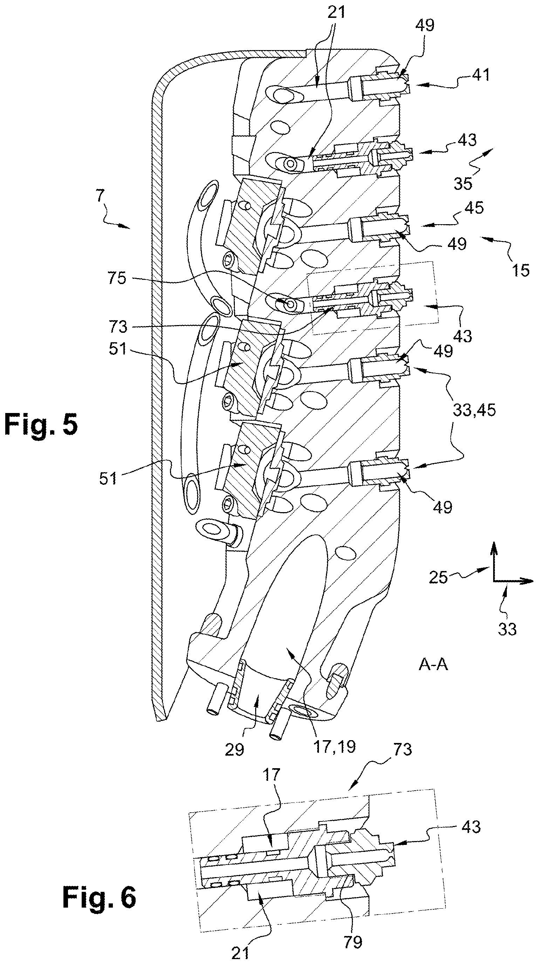

Comme illustré en particulier aux figures 4 et 5, le premier circuit 17 comprend une conduite principale 19 et une pluralité de conduites secondaires 21. La conduite principale 19 est en communication fluidique avec les conduites secondaires 21, chaque conduite secondaire 21 étant indépendante.

Une position d'utilisation de l'enneigeur 1 est définie par un axe horizontal 23 et un axe vertical 25. La conduite principale 19 est inclinée par rapport à l'axe horizontal 23, une portion supérieure 27 de la conduite principale 19 étant verticale. Le conduite principale 19 est en outre pourvue à sa base d'une entrée 29 destinée à être raccordée à une source d'alimentation en premier fluide. La source d'alimentation en premier fluide peut être un réservoir contenant du premier fluide ou un réseau d'alimentation en premier fluide. Dans le mode réalisation présenté, la source d'alimentation est un réseau d'eau.

Les conduites secondaires 21 présentent un angle 31 par rapport à l'axe horizontal 23, cet angle 31 étant inférieur à 90°. Dans le mode de réalisation présenté chaque conduite secondaire 21 présente un angle 31 identique par rapport à l'axe horizontal 23.

Un orifice 33 est ménagé à une extrémité de chaque conduite secondaire 21, l'orifice 33 mettant en communication fluidique la conduite secondaire 21 et l'extérieur 35.

Comme illustré à la figure 2, un premier groupe 37 d'orifices 33 est aligné verticalement et un deuxième groupe d'orifices 39 distant est aligné verticalement.

Chaque groupe 37, 39 d'orifices 33 comprend, du haut vers le bas en position d'utilisation, un orifice d'un premier type 41, un orifice d'un second type 43 et un orifice du troisième type 45. Par rapport à l'axe vertical 25, une première distance 47 séparant l'orifice du premier type 41 et l'orifice du second type 43 est égale à une deuxième distance 49 séparant l'orifice du second type 43 de l'orifice de troisième type 45.

Dans le mode de réalisation présenté chaque groupe 37, 39 d'orifices 33 comprend également un orifice du deuxième type 43 et deux orifices du troisième type 45 en dessous.

Comme illustré à la figure 5, chaque conduite secondaire 21 pourvue d'un orifice du premier type 41 comprend une buse de diffusion 49.

Chaque conduite secondaire 21 pourvue d'un orifice du troisième type 45 comprend également une buse de diffusion 49 et en outre une vanne 51 en amont. Chaque vanne 51 est agencée pour alternativement autoriser, en position ouverte, et interdire, en position fermée, la communication fluidique entre la conduite secondaire 21 et l'orifice du troisième type 45 correspondant.

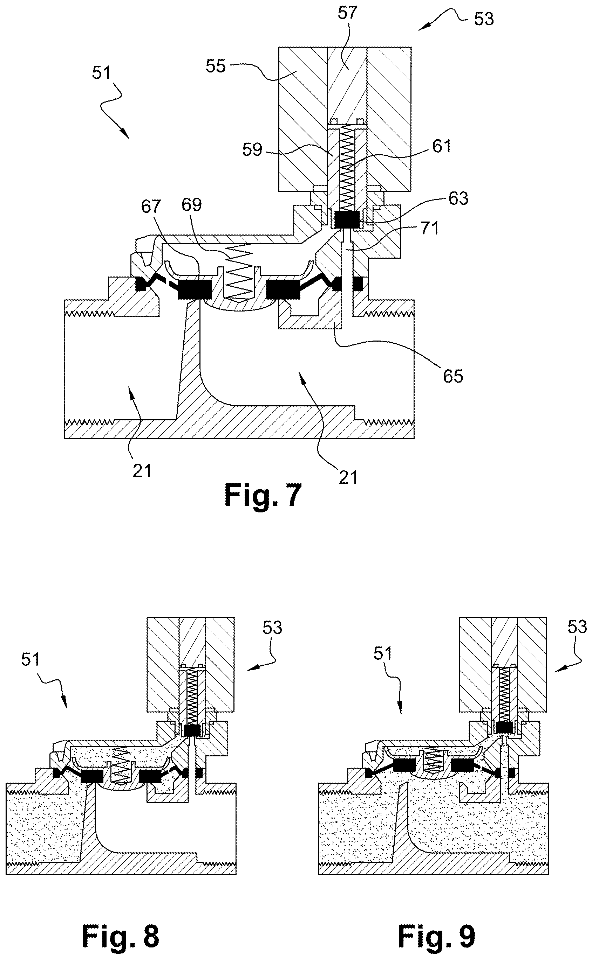

Le principe de fonctionnement de la vanne 51 est illustré aux figures 7 à 10. La vanne 51 utilisée est une électrovanne à membrane normalement fermée, elle comprend un actionneur 53 pourvu d'une bobine 55, d'une douille 57, d'un noyau 59, d'un ressort de noyau 61 et d'une membrane de séparation 63.

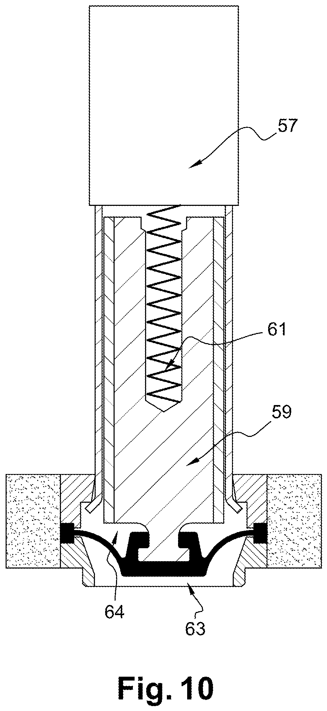

Comme illustré à la figure 10, la membrane de séparation 63 délimite la zone de passage du premier fluide et une zone intérieure 64 de la douille 57 comprenant le noyau 59.

La zone intérieure 64 est remplie d'un gel qui a la propriété de rester à l'état liquide aux températures d'utilisation de l'enneigeur 1. Ainsi l'actionneur 53 ne contient jamais d'eau contrairement aux vannes ne possédant pas de membrane de séparation 63. Cette disposition évite l'endommagement de l'actionneur 53 par la glace, c'est-à-dire le premier fluide solidifié par le froid, et augmente la fiabilité de la vanne 51.

La vanne 51 comprend en outre un corps 65 pourvu d'une membrane obturatrice 67 et d'un ressort de membrane 69.

La membrane obturatrice 67 est ménagée dans le corps 65 de manière à être mobile entre une position fermée comme illustré à la figure 8 et une position ouverte comme illustré à la figure 9. Une ouverture de pilotage 71 est ménagée dans le corps 65. Le noyau 59 est agencé pour déplacer la membrane de séparation 63 entre la position fermée dans laquelle la membrane de séparation 63 obstrue l'ouverture de pilotage 71 et la position ouverte dans laquelle membrane de séparation 63 n'obstrue pas l'ouverture de pilotage 71.

La vanne 51 est pourvue de moyens d'utilisation de la pression du premier fluide pour son maintien en position ouverte. En effet, comme notamment illustré à la figure 9, la membrane obturatrice 67 est ménagée de telle sorte à l'intérieur du corps 65 que la pression du fluide la maintient ouverte lorsque l'ouverture de pilotage 71 est ouverte.

Il est à noter que les figures 7 à 9 sont des figures schématiques illustrant le fonctionnement des vannes 51. Ainsi pour une meilleure visibilité, certaines pièces sont représentées à des échelles différentes et leur géométrie ne correspond pas à celle des pièces des vannes 51 représentées sur les autres figures.

Chaque conduite secondaire 21 pourvue d'un orifice du deuxième type 43 comprend une buse de mélange 73. La buse de mélange 73 est agencée pour diffuser vers l'extérieur le premier fluide et un deuxième fluide gazeux.

Pour ce faire chaque buse de mélange 73 est en communication fluidique avec un deuxième circuit 75 destiné au second fluide. Le deuxième circuit 75 est en outre pourvu d'une entrée 77 à sa base l'entrée 77 étant apte à être raccordée fluidiquement à une source d'alimentation en deuxième fluide. Notamment, dans le mode de réalisation présenté, la source d'alimentation du deuxième circuit 75 est un compresseur à air, non représenté, qui est agencé pour engendrer une pression de 6 à 8 bar dans le deuxième circuit 75.

Comme illustré à la figure 6, la buse de mélange 73 est apte à réaliser la pulvérisation du premier et du deuxième fluide vers l'extérieur lorsque le premier circuit 17et le deuxième circuit 75 sont alimentés par leurs fluides respectifs, le second fluide entrainant le premier fluide ce qui engendre un mélange 79 pulvérisé homogène.

L'enneigeur 1 comprend également un capteur apte à mesurer au moins une valeur de température et/ou un degré d'hygrométrie. Dans le mode de réalisation présenté, le capteur est apte à mesurer une température extérieure et il est rapporté sur le pied ou la perche de l'enneigeur.

L'enneigeur 1 comprend en outre un agencement de contrôle 81 rapporté sur le pied 3, comme illustré à la figure 1. L'agencement de contrôle 81 est agencé pour piloter l'alimentation du premier circuit 17 et du second circuit 75 à partir des sources d'alimentations correspondantes. L'agencement de contrôle 81 est également agencé pour manoeuvrer les vannes 51 et est connecté électriquement au capteur pour utiliser les valeurs des mesures réalisées par ce dernier.

Nous avons ci-dessus décrit les éléments constituant l'enneigeur 1 et leur agencement. Ci-dessous, nous présentons son fonctionnement et un procédé de contrôle dudit enneigeur 1.

Selon le mode de réalisation présenté, le procédé de contrôle de l'enneigeur comprend une première étape consistant à mesurer une valeur à partir du capteur.

La valeur est ensuite lue par l'agencement de contrôle 81. Dans le mode de réalisation présenté, l'agencement de contrôle 81 détermine dans un premier temps si la température extérieure mesurée est comprise entre -9°C et -2°C. Si tel est le cas l'enneigeur est dans sa plage de températures de fonctionnement et le procédé peut continuer. Sinon, la température extérieure est soit trop élevée soit trop faible et l'agencement de contrôle 81 n'autorise pas le fonctionnement de l'enneigeur 1.

La deuxième étape consiste en la détermination du débit de premier fluide pour une production maximale de neige. Ce débit est fonction de la température : plus celle-ci est faible, plus la production de neige est facile et plus le débit en premier fluide peut être important. Une fois le débit optimal en fluide primaire déterminé, l'agencement de contrôle 81 sélectionne les vannes 51 à ouvrir et les vannes 51 à fermer.

La troisième étape consiste à l'ouverture et à la fermeture des vannes 51 sélectionnées. Dans le mode de réalisation présenté, chaque seuil de un degré correspond à l'ouverture d'une vanne 51, toutes les vannes 51 étant fermées à une température extérieure de -2°C. Les trois étapes du procédé sont répétées de manière régulière, de sorte qu'un changement de température soit détecté rapidement.

Ce procédé permet d'une part d'optimiser la production de neige en fonction de la température extérieure mais également de produire rapidement une grande quantité de neige.

Naturellement l'agencement de contrôle 81 est également agencé pour être piloté par un utilisateur. Il est ainsi possible de mettre l'enneigeur 1 en fonctionnement pour exécuter les étapes du procédé décrit ci-dessus ou d'arrêter l'enneigeur 1.

A l'arrêt du fonctionnement, la géométrie du premier circuit 17 permet sa vidange par l'écoulement gravitaire du premier fluide, l'absence d'alimentation du premier circuit 17 par la source d'alimentation correspondante entrainant la vidange.

Le premier circuit 17 ne présente ainsi aucune zone de rétention ou de stagnation du premier fluide susceptible de générer de la glace à l'arrêt de l'enneigeur 1. Le risque de détérioration de l'enneigeur et plus particulièrement du premier circuit par la glace est donc négligeable.

Il est également à remarquer que cette disposition dispense d'utiliser un processus de dégel ou de dégivrage du premier circuit 17, ce qui accroit la fiabilité de l'enneigeur 1.

Lors de l'arrêt de l'enneigeur 1, les vannes 51 sont maintenues ouvertes pendant une certaine période pour permettre la vidange des conduites secondaires 21 correspondantes. Les vannes 51 sont ensuite refermées, c'est-à-dire qu'elles ne sont plus alimentées, ce qui diminue la consommation énergétique par rapport à celle de système de pulvérisation utilisant des vannes normalement ouvertes.

Egalement concernant la consommation énergétique de l'enneigeur 1 dans son ensemble, l'utilisation de vannes 51 fonctionnant en partie grâce à la pression du premier fluide, pour s'ouvrir et être maintenues en position ouverte, participe à la faible consommation de l'enneigeur.

Comme il va de soi, l'invention ne se limite pas à la seule forme d'exécution de cet enneigeur, décrit ci-dessus à titre d'exemple, elle en embrasse au contraire toutes les variantes de réalisation couvertes par les revendications suivantes.

## Revendications

1. Système de pulvérisation (15) comprenant un premier circuit (17) d'alimentation en un premier fluide liquide et un deuxième circuit (75) d'alimentation en un deuxième fluide gazeux, chaque circuit (17, 75) étant pourvu d'une entrée (29, 77) destinée à être raccordée à une source d'alimentation en fluide correspondant, le système de pulvérisation (15) comprenant en outre :
- un orifice d'un premier type (41) raccordé fluidiquement au premier circuit (17) et débouchant vers l'extérieur (35),
- un orifice d'un second type (43) raccordé fluidiquement conjointement au premier (17) et au deuxième circuit (75), l'orifice du second type (43) débouchant vers l'extérieur (35),
- un orifice d'un troisième type (45) raccordé fluidiquement au premier circuit (17) et débouchant vers l'extérieur (35),
- une vanne (51) disposée dans le premier circuit (17) et agencée pour alternativement autoriser, en position ouverte, et interdire, en position fermée, la communication fluidique entre le premier circuit (17) et l'orifice du troisième type (45),
le système de pulvérisation (15) étant **caractérisé en ce qu'**il est agencé pour, en une position d'utilisation, la vanne (51) étant ouverte, la vidange par écoulement gravitaire du premier circuit (17) à travers l'entrée (29) dudit premier circuit (17).

2. Système de pulvérisation (15) selon la revendication 1, dans lequel le premier circuit (17) comprend au moins une conduite principale (19) et une pluralité de conduites secondaires (21), chaque conduite secondaire (21) étant, en position d'utilisation, en communication fluidique entre la conduite principale (19) et un orifice (33), chaque conduite secondaire (21) présentant un angle (31) par rapport à l'horizontale (23).

3. Système de pulvérisation (15) selon l'une des revendications précédentes, dans lequel la vanne (51) est une vanne normalement fermée.

4. Système de pulvérisation (15) selon l'une des revendications précédentes, dans lequel la vanne (51) comprend un actionneur (53) pourvu d'un noyau (59) compris dans une zone intérieure (64) de l'actionneur (53), le noyau (59) étant mobile et agencé pour l'ouverture et la fermeture de la vanne (51), la vanne comprenant une membrane de séparation (63) assurant l'étanchéité de la zone intérieure (64) par rapport à la zone de passage du premier fluide dans la vanne.

5. Système de pulvérisation (15) selon l'une des revendications précédentes, dans lequel la vanne (51) comprend une membrane obturatrice (67) de la zone de passage du premier fluide, la vanne (51) étant pourvue de moyens d'utilisation de la pression du premier fluide pour son ouverture et son maintien en position ouverte.

6. Système de pulvérisation (15) selon l'une des revendications précédentes, comprenant une pluralité d'orifices du troisième type (45) et une pluralité de vannes (51), chaque vanne (51) étant affectée à un orifice du troisième type (45).

7. Système de pulvérisation (15) selon l'une des revendications précédentes, dans lequel, en position d'utilisation, un groupe (37) d'orifices (33) comprend un orifice du premier type (41), un orifice du deuxième type (43) et un orifice du troisième type (45), l'orifice du premier type (41) étant le plus haut, l'orifice du deuxième type (43) étant plus bas que l'orifice du premier type (41) et l'orifice du troisième type (45) étant plus bas que l'orifice du second type (43).

8. Système de pulvérisation (15) selon la revendication précédente, dans lequel le groupe (37) d'orifices (33) comprend en outre au moins un orifice de deuxième type (43) et au moins un orifice de troisième type (45) situés sous les autres orifices (33) du groupe (37).

9. Système de pulvérisation (15) selon l'une des revendications 7 ou 8 dans lequel les orifices (33) du groupe (37) sont alignés verticalement.

10. Système de pulvérisation (15) selon l'une des revendications 7 à 9, comprenant au moins deux groupes (37, 39).

11. Enneigeur (1) à alimentation bi-fluide comprenant :
- le système de pulvérisation (15) selon l'une des revendications précédentes,
- un agencement de contrôle (81) apte à piloter l'alimentation des premier (17) et deuxième (75) circuits en fluides et à manoeuvrer les vannes (51).

12. Enneigeur (1) selon la revendication précédente comprenant en outre un capteur agencé pour la mesure d'une température et/ou d'un degré d'hygrométrie, l'agencement de contrôle (81) étant apte à utiliser les mesures du capteur.

13. Procédé de contrôle d'un enneigeur (1) à alimentation bi-fluide selon l'une des revendications 11 ou 12, comprenant les étapes consistant à :
- mesurer une valeur de température extérieure et/ou une donnée hygrométrique,
- déterminer les vannes (51) à ouvrir ou à fermer en fonction de la valeur mesurée,
- procéder à l'ouverture ou à la fermeture des vannes (51) déterminées.

## Patentansprüche

1. Zerstäubungssystem (15), das einen ersten Kreis (17) zum Speisen mit einem ersten flüssigen Fluid umfasst, und einen zweiten Kreis (75) zum Speisen mit einem zweiten gasförmigen Fluid, wobei jeder Kreis (17, 75) mit einem Einlass (29, 77) versehen ist, der dazu vorgesehen ist, mit einer entsprechenden Fluidspeisequelle verbunden zu werden, wobei das Zerstäubungssystem (15) weiter umfasst:
- eine Bohrung eines ersten Typs (41), die fluidisch mit dem ersten Kreis (17) verbunden ist und zur Außenseite (35) hin mündet,
- eine Bohrung eines zweiten Typs (43), die fluidisch gleichzeitig mit dem ersten (17) und mit dem zweiten Kreis (75) verbunden ist, wobei die Bohrung des zweiten Typs (43) zur Außenseite (35) hin mündet,
- eine Bohrung eines dritten Typs (45), die fluidisch mit dem ersten Kreis (17) verbunden ist und zur Außenseite (35) hin mündet,
- ein Ventil (51), das im ersten Kreis (17) angeordnet und dafür eingerichtet ist, die Fluidkommunikation zwischen dem ersten Kreis (17) und der Bohrung des dritten Typs (45) wechselweise in offener Stellung zu gestatten und in geschlossener Stellung zu unterbinden,
wobei das Zerstäubungssystem (15) **dadurch gekennzeichnet ist, dass** es in einer Gebrauchsstellung, wobei das Ventil (51) geöffnet ist, für das Entleeren des ersten Kreises (17) durch Schwerkraftströmung durch den Einlass (29) des ersten Kreises (17) hindurch eingerichtet ist.

2. Zerstäubungssystem (15) nach Anspruch 1, wobei der erste Kreis (17) mindestens eine Hauptleitung (19) und eine Vielzahl von Sekundärleitungen (21) umfasst, wobei sich jede Sekundärleitung (21) in Gebrauchsstellung in Fluidkommunikation zwischen der Hauptleitung (19) und einer Bohrung (33) befindet, wobei jede Sekundärleitung (21) in Bezug auf die Horizontale (23) einen Winkel (31) aufweist.

3. Zerstäubungssystem (15) nach einem der vorstehenden Ansprüche, wobei das Ventil (51) ein Öffnungsventil ist.

4. Zerstäubungssystem (15) nach einem der vorstehenden Ansprüche, wobei das Ventil (51) einen Aktor (53) umfasst, der mit einem Kern (59) versehen ist, der in einem inneren Bereich (64) des Aktors (53) umfasst ist, wobei der Kern (59) beweglich und für das Öffnen und das Schließen des Ventils (51) eingerichtet ist, wobei das Ventil eine Trennmembran (63) umfasst, die die Dichtigkeit des inneren Bereichs (64) in Bezug auf den Übertrittsbereich des ersten Fluids in das Ventil sicherstellt.

5. Zerstäubungssystem (15) nach einem der vorstehenden Ansprüche, wobei das Ventil (51) eine Verschlussmembran (67) des Übertrittsbereichs des ersten Fluids umfasst, wobei das Ventil (51) mit Mitteln zum Verwenden des Drucks des ersten Fluids für dessen Öffnen und dessen Halten in geöffneter Stellung versehen ist.

6. Zerstäubungssystem (15) nach einem der vorstehenden Ansprüche, das eine Vielzahl von Bohrungen des dritten Typs (45) und eine Vielzahl von Ventilen (51) umfasst, wobei jedes Ventil (51) einer Bohrung des dritten Typs (45) zugeordnet ist.

7. Zerstäubungssystem (15) nach einem der vorstehenden Ansprüche, wobei in Gebrauchsstellung eine Gruppe (37) von Bohrungen (33) eine Bohrung des ersten Typs (41), eine Bohrung des zweiten Typs (43) und eine Bohrung des dritten Typs (45) umfasst, wobei sich die Bohrung des ersten Typs (41) am weitesten oben befindet, sich die Bohrung des zweiten Typs (43) weiter unten befindet als die Bohrung des ersten Typs (41), und sich die Bohrung des dritten Typs (45) weiter unten befindet als die Bohrung des zweiten Typs (43).

8. Zerstäubungssystem (15) nach dem vorstehenden Anspruch, wobei die Gruppe (37) von Bohrungen (33) weiter mindestens eine Bohrung vom zweiten Typ (43) und mindestens eine Bohrung vom dritten Typ (45) umfasst, die unter den anderen Bohrungen (33) der Gruppe (37) liegen.

9. Zerstäubungssystem (15) nach einem der Ansprüche 7 oder 8, wobei die Bohrungen (33) der Gruppe (37) vertikal ausgerichtet sind.

10. Zerstäubungssystem (15) nach einem der Ansprüche 7 bis 9, das mindestens zwei Gruppen (37, 39) umfasst.

11. Schneekanone (1) mit Zwei-Fluid-Speisung, umfassend:
- das Zerstäubungssystem (15) nach einem der vorstehenden Ansprüche,
- eine Steueranordnung (81), die in der Lage ist, die Speisung des ersten (17) und zweiten (75) Kreises mit Fluiden zu steuern und die Ventile (51) zu betätigen.

12. Schneekanone (1) nach dem vorstehenden Anspruch, weiter einen Sensor umfassend, der für die Messung einer Temperatur und/oder eines Hygrometriegrades eingerichtet ist, wobei die Steueranordnung (81) in der Lage ist, die Messungen des Sensors zu verwenden.

13. Verfahren zum Steuern einer Schneekanone (1) mit Zwei-Fluid-Speisung nach einem der Ansprüche 11 oder 12, umfassend die Schritte, die bestehen im:
- Messen eines Außentemperaturwerts und/oder eines hygrometrischen Datenwerts,
- Bestimmen der zu öffnenden oder zu schließenden Ventile (51) in Abhängigkeit vom gemessenen Wert,
- Verfahren mit dem Öffnen oder dem Schließen der bestimmten Ventile (51).

## Claims

1. A spraying system (15) comprising a first circuit (17) for supply with a first liquid fluid and a second circuit (75) for supply with a second gaseous fluid, each circuit (17, 75) being provided with an inlet (29, 77) intended to be connected to a corresponding fluid supply source, the spraying system (15) further comprising:
- an orifice of a first type (41) fluidly connected to the first circuit (17) and opening outwards (35),
- an orifice of a second type (43) fluidly connected collectively with the first (17) and second (75) circuits, the orifice of the second type (43) opening outwards (35),
- an orifice of a third type (45) fluidly connected to the first circuit (17) and opening outwards (35),
- a valve (51) disposed in the first circuit (17) and arranged to alternately allow, in the open position, and prohibit, in the closed position, the fluid communication between the first circuit (17) and the orifice of the third type (45),
the spraying system (15) being **characterized in that** it is arranged, in a position of use, the valve (51) being open, for the drain by gravity flow of the first circuit (17) through the inlet (29) of said first circuit (17).

2. The spraying system (15) according to claim 1, wherein the first circuit (17) comprises at least one main duct (19) and a plurality of secondary ducts (21), each secondary duct (21) being, in the position of use, in fluid communication between the main duct (19) and an orifice (33), each secondary duct (21) having an angle (31) with respect to the horizontal (23).

3. The spraying system (15) according to any of preceding claims, wherein the valve (51) is a normally closed valve.

4. The spraying system (15) according to any of the preceding claims, wherein the valve (51) comprises an actuator (53) provided with a core (59) comprised in an inner area (64) of the actuator (53), the core (59) being movable and arranged for the opening and closing of the valve (51), the valve comprising a separation membrane (63) ensuring the sealing of the inner area (64) with respect to the area of passage of the first fluid in the valve.

5. The spraying system (15) according to any of the preceding claims, wherein the valve (51) comprises a membrane (67) obturating the area of passage of the first fluid, the valve (51) being provided with means for using the pressure of the first fluid for its opening and its holding in the open position.

6. The spraying system (15) according to any of the preceding claims, comprising a plurality of orifices of the third type (45) and a plurality of valves (51), each valve (51) being assigned to an orifice of the third type (45).

7. The spraying system (15) according to any of the preceding claims, wherein, in the position of use, a group (37) of orifices (33) comprises an orifice of the first type (41), an orifice of the second type (43) and an orifice of the third type (45), the orifice of the first type (41) being the highest, the orifice of the second type (43) being lower than the orifice of the first type (41) and the orifice of the third type (45) being lower than the orifice of the second type (43).

8. The spraying system (15) according to any of the preceding claims, wherein the group (37) of orifices (33) further comprises at least one orifice of the second type (43) and at least one orifice of the third type (45) located under the other orifices (33) of the group (37).

9. The spraying system (15) according to any of claims 7 or 8, wherein the orifices (33) of the group (37) are vertically aligned.

10. The spraying system (15) according to any of claims 7 to 9, comprising at least two groups (37, 39).

11. A snow gun (1) with dual-fluid supply comprising:
- the spraying system (15) according to any of the preceding claims,
- a control arrangement (81) capable of piloting the supply of the first (17) and second (75) circuits with fluids and of maneuvering the valves (51).

12. The snow gun (1) according to the preceding claim further comprising a sensor arranged for the measurement of a temperature and/or of a hygrometry degree, the control arrangement (81) being able to use the measurements of the sensor.

13. A method for controlling a snow gun (1) with dual-fluid supply according to any of claims 11 or 12, comprising the steps consisting of:
- measuring an outdoor temperature value and/or a hygrometric data,
- determining the valves (51) to be opened or closed according to the measured value,
- performing the opening or the closing of the determined valves (51).
